Europäisches Patentamt

European Patent Office

Office européen des brevets

(11) Publication number: **0 299 784**
**A2**

(12) **EUROPEAN PATENT APPLICATION**

(21) Application number: 88306488.3

(22) Date of filing: 15.07.88

(51) Int. Cl.⁴: **H 04 M 3/42**
**H 04 Q 3/545**

(30) Priority: 16.07.87 US 74532

(43) Date of publication of application:
**18.01.89 Bulletin 89/03**

(84) Designated Contracting States:
**AT BE CH DE ES FR GB GR IT LI LU NL SE**

(71) Applicant: **OCTEL COMMUNICATIONS CORPORATION**
**890 Tasman Drive**
**Milpitas California 95035 (US)**

(72) Inventor: **Barnett, Paul Michael**
**1180 Lochinvar Avenue Number 9**
**Sunnyvale California 94087 (US)**

**Welch, Douglas A.**
**1155 Lockhaven Way**
**San Jose California 95129 (US)**

**MacMillan, Duncan J. S., Jr.**
**27345 Natona Road**
**Los Altos Hills California 94022 (US)**

(74) Representative: **Cross, Rupert Edward Blount et al**
**BOULT, WADE & TENNANT 27 Furnival Street**
**London EC4A 1PQ (GB)**

(54) **Feature telephone integration device.**

(57) The device (15) is for use in a PBX-type environment in a telephone communication system, and uses communications with a feature phone (12) as a source of information for an applications processor (30).

FIG.—2

**Description**

## FEATURE TELEPHONE INTEGRATION DEVICE

The present invention relates to a telephone communication system, and more particularly to a feature telephone integration device for utilization in a PBX (Private Branch Exchange) environment.

PBX systems are, of course, well known in the prior art. Communications are established between any external device (such as, but not limited to, a voice processing system) and a PBX system. Operation of external systems, often called applications processors, is enhanced when information from the PBX system is passed to the applications processor prior to, concurrent with or following a telephone call. Applications processors add features and functionality to a computer or telephone system.

Some of the functions an applications processor might add are automatic call distribution (ACD), voice mail, call detail recording, and so on.

An applications processor often acts like one or more telephone extensions to the PBX system. Calls terminate on the applications processor for several reasons, including, for example, when calls are placed directly to the applications processor, when calls are forwarded from an internal extension to the applications processor, when calls are forwarded from an internal extension to another extension and then to the applications processor, and when calls are forwarded from a trunk group to the applications processor.

Calls which are forwarded from an extension or trunk group to the applications processor may have been forwarded because of a busy condition, ring-no-answer condition, or other condition (such as "do not disturb").

An applications processor may handle a telephone call more efficiently if it knows why the call came to it in the first place. The ability of an applications processor to communicate with the PBX or computer system is often called integration. A device which would enable this information to be passed to the applications processor would greatly enhance the value of the applications processor.

Many PBX systems have feature telephones (also called feature phones or executive phones) which provide a great deal of information to the user of the telephone system. Some or all of the information required by an applications processor for integration, as described above, is passed by the PBX to its own feature phone. In most cases, the feature phones are proprietary devices designed and manufactured by the maker of the particular PBX. In some approaches, it has been possible to provide a complete emulation of the feature phone in order to accomplish integration.

According to this invention there is provided a feature telephone integration device for use in a telephone communication system comprising a feature telephone set, an applications processor, and a PBX, characterised in that the device comprises integration means for monitoring telephone communications between the applications processor, the feature telephone set and the PBX in order to determine the nature or type of said telephone communications, and means for informing the applications processor of the nature or type of said telephone communications.

The invention provides a device which uses the communications with a feature phone as the source of information for an applications processor. The device does not emulate a feature phone, but rather connects to the internal circuitry of a feature phone and monitors communications within the telephone itself, from the PBX, or other, which post information required on various displays of the feature phone.

The device of the invention is thus able to monitor situations such as where all characters are passed to a visual display on a feature phone, such as liquid crystal displays (LCDs), light emitting diodes (LEDs) and other indicators on the feature phone. The device is also able to electronically "depress" any key on the feature phone, which then causes the PBX to take certain specific actions.

This invention will now be described by way of example with reference to the drawings, in which:-

Fig. 1 is a block diagram of a telephone system incorporating a device according to the invention;

Fig. 2 is a block diagram of a feature telephone integration device according to the invention; and

Fig. 3 is a more detailed diagram of the integration device of Fig. 2.

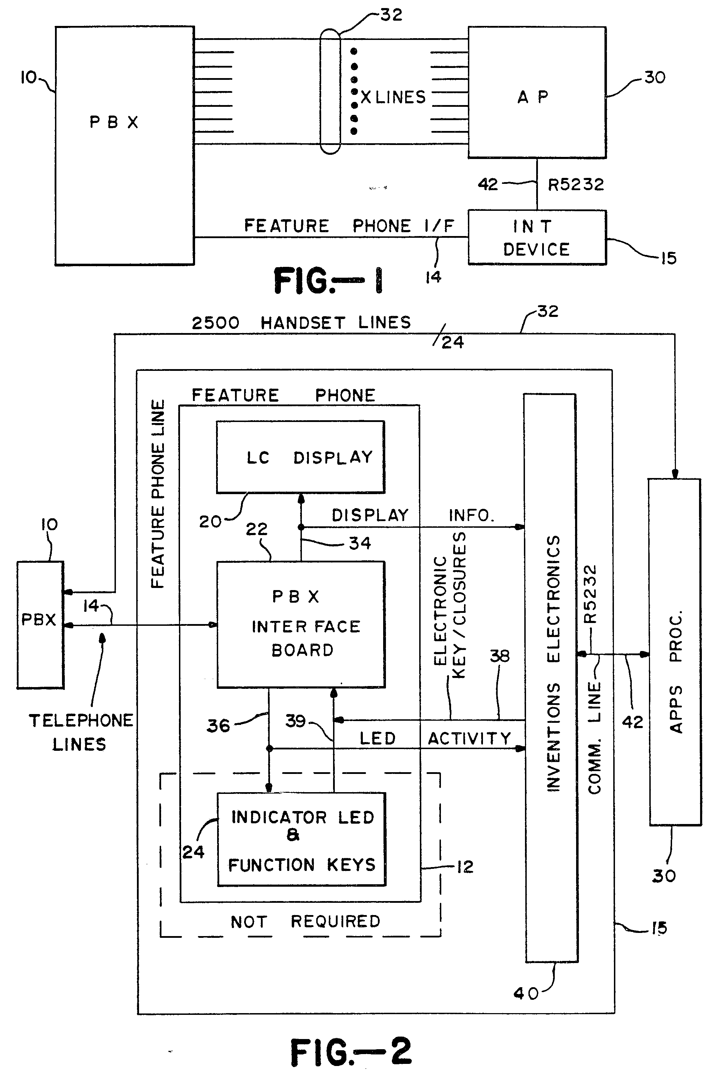

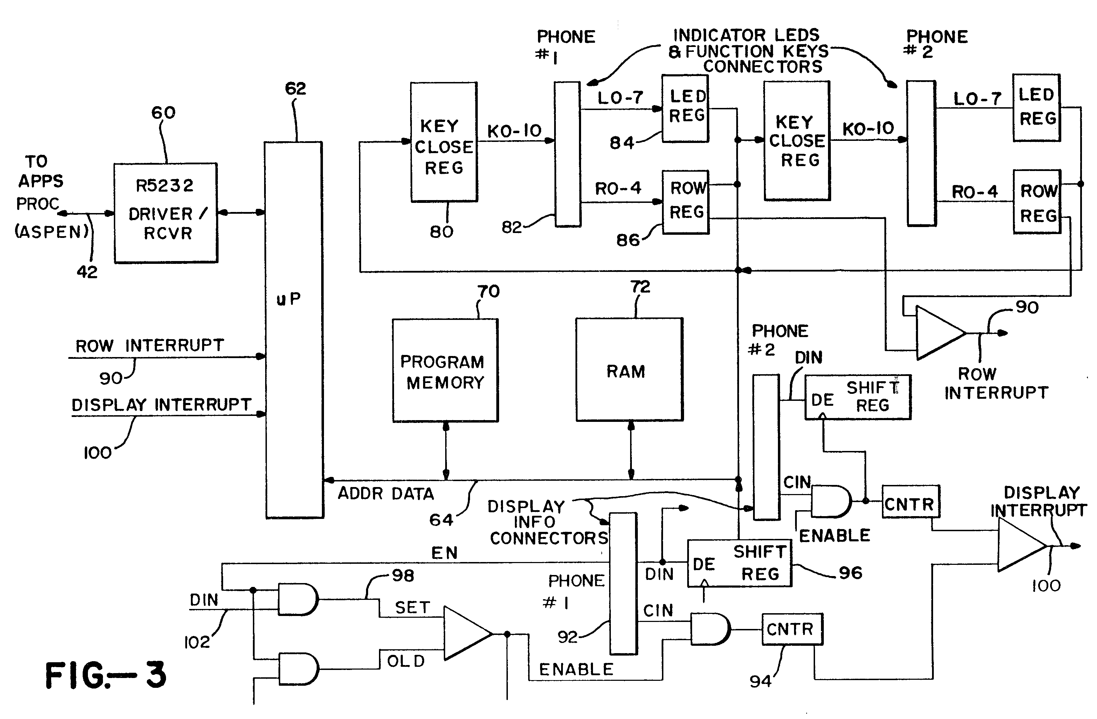

In Fig. 1, the telephone system includes a conventional PBX 10 which is connected to an applications processor (AP) 30 via lines or leads 32. PBX 10 is also connected to an integration device 15 via lead 14. Device 15 is connected to AP 30 via lead 42, which is a conventional RS232 interface. A more detailed diagram of the present invention is depicted in Fig. 2.

In Fig. 2, the system includes a PBX (Private Branch Exchange) 10 connected to a suitable feature phone 12 via suitable telephone lead 14. The feature phone 12, connected to a suitable PBX, could be any one of various models available such as through Rolm Corporation, AT&T and the like. The feature phone telephone 12 includes a display 20 and indicator LEDs and function keys 24, both of which are connected to a PBX interface board 22.

The interface board 22 is connected to telephone lead 14 for establishing communications between PBX 10 and feature phone 12.

PBX interface board 22 connects to LC display 20 via lead 34. PBX interface board 22 also connects to indicator LEDs and function keys 24 via leads 36, 39.

The system depicted in Fig. 2 also includes an applications processor 30 which is connected to PBX 10 via telephone connection 32 which typically has twenty-four connections. Applications processor 30 could be any of any well known applications processors available, such as a commercially available processor manufactured by Octel Communications Corporation (known as "Aspen").

The system depicted in Fig. 2 also includes an integration device 40, which is interconnected to applications processor 30 via communication line 42 for communicating in an RS232 format.

The integration device 40 also provides connection to feature phone 12 via lead 34 for receiving display information going to LC display 20.

The integration device 40 also is connected to receive LED activity signals on lead 36 and provide electronic key/closure signals on lead 38. The integration device 40 is able to monitor communications with the feature telephone 12, and in addition is able to electronically "depress" any key on the feature telephone which causes PBX 10 to take certain predetermined actions.

Fig. 3, depicts a more detailed diagram of integration device 40 of Fig. 2.

In Fig. 3, lead 42 corresponds to the same lead 42 in Fig. 2 for communicating with the applications processor 30 of Fig. 2. The RS232 formatted information is transmitted via a suitable driver/receiver circuit 60, which is connected to a microprocessor 62.

Microprocessor 62 provides for interconnection to the other components of Fig. 3 by a suitable address/data bus 64. Other components in Fig. 3 include a program memory 70 and a suitable random access memory (RAM) 72 interconnected to bus 64.

Also included in Fig. 3 are indicator LEDs and function key connectors such as circuit 82. The components in Fig. 3 are configured for separate telephone connections and thus there is a redundancy for the respective telephone connections. However, in order to understand the aspects of the present invention, only the components for a separate telephone connection need be described.

Each circuit 82 is connected to receive information via a key close register such as register 80. Each circuit 82 provides LED information for LED register 84, and row information for register 86.

A row interrupt signal is generated on lead 90. In order to provide suitable display information and control signals, a display interrupt signal is generated on lead 100 via the interconnections of logic circuit 98, display information connectors 92, shift register 96 and counter 94.

As can be seen in Fig. 3, each redundant configuration is provided for separate telephone connections, as described above.

The device has the ability to request that a telephone line on the applications processor 30 of Fig. 2 be reserved. The present invention monitors the communications from PBX 10 to feature phone 12 to provide the necessary integration information of each call for the applications processor 30.

The device will electronically "see" an LED flashing, and electronically push the corresponding button for that line appearance. This is controlled by the signals on leads 36 and 38, depicted in Fig. 2.

When a feature phone answers any line, PBX 10 will send characters to it corresponding to all activity relating to the call, such as the source of the call, reason for the call, and the like. The device monitors all of this communication with the display 20 of Fig. 2.

The device may employ additional feature phones for the purpose of illuminating or de-illuminating message waiting indicators. A feature phone has the capability of pushing a button, dialing an extension number and determining whether or not a message waiting light is illuminated for any extension in the system. The device electronically accomplishes this task using feature phone functions.

Since illuminating and de-illuminating message waiting indicators may be an intensive task, the present invention may employ a separate feature phone.

In order to more clearly explain the aspects of the device two specific examples of incoming calls will now be described in conjunction with the device, depicted in Figs. 1-3.

A first type of incoming call could be a normal subscriber access call. In that type of operation, there is a set of line appearances, which are telephone line appearances reserved on the feature phone table, which is a table created within the software of the PBX 10. The table indicates where all of the telephone line appearances are.

The device "looks" at the LED indicators 12 in Fig. 2 to see if someone is calling one of those lines.

This is accomplished by reading lead 36, which is the LED activity line, which indicates some form of flashing when a telephone call is incoming.

Before the call is actually answered, the device "crosses" interface 42 and talks to the application processor 30 to ask for a telephone line, and if available, to reserve that telephone line.

When the telephone line is available, the device answers the calls and read the display information on LC display 20.

The device answers the call by indicating a key closure to the switch via a signal on electronic key closure lead 38 of Fig. 2, which then answers the call. This simulates the answering just like a normal person would. The outside caller is connected to the telephone itself.

The device then processes the display information from display 20 through lead 34 to determine the kind of call which is incoming. This would determine whether it is an inside call, what the extension number is, and so forth.

Once the display information is processed, the device uses a feature within PBX 10 which is known as "Park." The device "depresses" a function key on indicator 24 of Fig. 2 and dials the extension number of the port in the applications processor 30 that has been reserved.

When this happens, the caller is rerouted to a port on applications processor 30 which sends a message across interface 42 which gives incoming call information about the person that is calling and which port the call is on.

The applications processor will go off hook on that port, dial a connect feature code, which will cut a voice path through from the caller to the applications processor 30. After that message is sent out, the device takes no further action in connection with the telephone interface.

Another type of operation utilizes an operator to transfer the call into the applications processor 30.

There is another set of line appearances typically available which is different than one in which a normal subscriber is calling on or being forwarded to.

The device monitors this type of activity through the LED indicator line 36 and checks to determine if it is ringing, as in normal operation.

The device then reserves a port on the applications processor 30 through the message to interface 42.

Once the reserve message is received, the device sends another message to the applications processor 30 to identify which extension number should be "picked." The call that is ringing on the device is "picked" by applications processor 30, using the port that was reserved.

If there is a message waiting for a user, the applications processor sends a message to the device across interface 42 to tell which extension is desired for a message. The device will "electronically depress" the appropriate key on indicator 24 for that particular line appearance on which there is a message waiting line.

The device "reads" the LED activity to make sure that there is a dial tone on the line, then depress as a message waiting key, which is on typical type feature phones, dials the extension number of the person desired, reads the LED activity to see whether or not it is already set or cleared, and changes if need be through the key closures to complete the operation.

## Claims

1. A feature telephone integration device (15) for use in a telephone communication system comprising a feature telephone set (12), an applications processor (30), and a PBX (10), characterised in that the device (15) comprises integration means (40) for monitoring telephone communications between the applications processor (30), the feature telephone set (12) and the PBX (10) in order to determine the nature or type of said telephone communications, and means for informing the applications processor of the nature or type of said telephone communications.

2. A device as claimed in Claim 1, characterised in that the feature telephone set (12) includes a display (20) for visually displaying received characters, and said integration means includes means for monitoring said displayed characters.

3. A device as claimed in Claim 1 or Claim 2, characterised in that the feature telephone set includes a plurality of function keys (24), and said integration means includes means for electronically initiating actuation of any one of said function keys (24) so as to cause said PBX (10) to take a specified action.

0299784

FIG.—1

FIG.—2

FIG.—3